# EUROPÄISCHE PATENTANMELDUNG

(11) **EP 1 153 709 A2**
(43) Veröffentlichungstag der Anmeldung: **14.11.2001**
(21) Anmeldenummer: 01110577.2
(22) Anmeldetag: 30.04.2001
(51) Int. Cl.: B23Q 37/00, B23Q 5/04

(54) **Zusatzwerkzeug für eine Fräsmaschine**

(30) Priorität: 09.05.2000 DE 10022317
(71) Anmelder: Ludt, Wolfgang, 66119 Saarbrücken (DE)
(72) Erfinder: Ludt, Wolfgang, 66119 Saarbrücken (DE)
(74) Vertreter: Bernhardt, Winfrid, Dr.-Ing.

(57) **Zusammenfassung**

Die Erfindung betrifft ein Zusatzwerkzeug für eine Fräsmaschine, das über ein Trägergehäuse an den die Spindel der Fräsmaschine umfassenden Werkzeugträger koppelbar und zur Änderung der Arbeitsstellung durch die Fräsmaschinenspindel um deren Drehachse drehbar ist und eine Arbeitsspindel mit einer zur Drehachse der Fräsmaschinenspindel geneigten Drehachse aufweist. Erfindungsgemäß ist eine erste Kopplungseinrichtung zum Ver- und Entkoppeln von Trägergehäuse und Werkzeugträger vorgesehen, durch die das Trägergehäuse unter Herstellung einer Antriebsverbindung zwischen Arbeitsspindel und Fräsmaschinenspindel drehfest an den Werkzeugträger koppelbar ist, sowie eine zweite Kopplungseinrichtung zum Ver- und Entkoppeln von Trägergehäuse und Fräsmaschinenspindel, so daß im verkoppelten Zustand das Zusatzwerkzeug mit der Fräsmaschinenspindel mitdrehen kann.

## Beschreibung

### Beschreibung:

Die Erfindung betrifft ein Zusatzwerkzeug für eine Fräsmaschine, das über ein Trägergehäuse an den die Spindel der Fräsmaschine umfassenden Werkzeugträger koppelbar und zur Änderung der Arbeitsstellung durch die Fräsmaschinenspindel um deren Drehachse drehbar ist und eine Arbeitsspindel mit einer zur Drehachse der Fräsmaschinenspindel geneigten Drehachse aufweist.

Ein solches Zusatzwerkzeug für eine Fräsmaschine ist aus der DE 196 20 485 A1 bekannt. Durch die schräggestellte Arbeitsspindel dieses Zusatzwerkzeugs, das nach allen Seiten hin ausgerichtet werden kann, ist eine Bearbeitung senkrechter Flächen in größere Tiefen hinein möglich. Damit lassen sich z.B. die Formwerkzeuge zur Herstellung von Kunststoffteilen weitgehend auf einer Fräsmaschine herstellen, wobei das Zusatzgerät die durch die Verwendung der Hauptspindel der Fräsmaschine gegebenen Bearbeitungsmöglichkeiten wesentlich erweitert. Das Trägergehäuse dieser bekannten Zusatzeinrichtung ist unmittelbar an die Fräsmaschinenspindel gekoppelt. Für den Antrieb der Arbeitsspindel weist das Zusatzwerkzeug einen eigenen Antriebsmotor auf.

Der vorliegenden Erfindung liegt die Aufgabe zugrunde, ein neues Zusatzwerkzeug der eingangs erwähnten Art zu schaffen, das sich einfacher als das bekannte mit eigenem Motorantrieb steuern läßt.

Das diese Aufgabe lösende Zusatzwerkzeug nach der Erfindung ist gekennzeichnet durch eine erste Kopplungseinrichtung zum Ver- und Entkoppeln von Trägergehäuse und Werkzeugträger, durch die das Trägergehäuse unter Herstellung einer Antriebsverbindung zwischen Antriebsspindel und Fräsmaschinenspindel drehfest an den Werkzeugträger koppelbar ist, sowie eine zweite Kopplungseinrichtung zum Ver- und Entkoppeln von Trägergehäuse und Fräsmaschinenspindel, so daß im verkoppelten Zustand das Zusatzwerkzeug mit der Fräsmaschinenspindel mitdrehen kann.

Gemäß dieser Erfindungslösung erfolgt also der Antrieb der Arbeitsspindel des Zusatzwerkzeugs über die Hauptspindel der Fräsmaschine. Soll eine Verstellung des Zusatzwerkzeugs erfolgen, so wird die Drehzahl der Fräsmaschinenspindel reduziert und über die erste Kopplungseinrichtung die drehfeste Verkopplung des Trägergehäuses des Zusatzwerkzeugs mit dem Werkzeugträger gelöst. Um das Zusatzwerkzeug nun durch die Fräsmaschinenspindel in langsamer Drehung in eine gewünschte neue Arbeitsstellung zu bringen, wird durch die zweite Kopplungseinrichtung das Trägergehäuse mit der Fräsmaschinenspindel drehfest verbunden. Damit ist das gesamte Zusatzwerkzeug über die Arbeitsspindel verdrehbar. Sowohl die Kopplungsvorgänge als auch der Drehvorgang können im Rahmen der allgemeinen Programmsteuerung der Fräsmaschine erfolgen.

Während es denkbar wäre, die Drehung der Fräsmaschinenspindel auf die zu dieser geneigte Arbeitsspindel des Zusatzwerkzeugs über eine biegsame Welle zu übertragen, weist in der bevorzugten Ausführungsform der Erfindung das Zusatzwerkzeug ein, vorzugsweise Kegelräder umfassendes, Getriebe auf.

Ferner ist in der bevorzugten Ausführungsform der Erfindung zwischen dem Trägergehäuse und dem Werkzeugträger eine Klemmverbindung herstellbar. Insbesondere weist das Trägergehäuse hierfür einen auf eine Lagerung für die Fräsmaschinenspindel aufschiebbaren topfartigen Ansatz auf, der mit einem axialen Schlitz versehen ist, der eine Verklemmung mit der Lagereinrichtung durch Einschnürung des Ansatzes erlaubt. Vorteilhaft kann der Ansatz mit einem weiteren, zu dem axialen Schlitz senkrechten Schlitz versehen sein, so daß ein axialer Abschnitt des Ansatzes besonders leicht einschnürbar ist.

Vorzugsweise umfaßt die erste Kopplungseinrichtung eine beim Nachlassen einer zur Entkopplung ausgeübten Betätigungskraft automatisch die Kopplung wiederherstellende Spanneinrichtung. Diese Maßnahme dient der Arbeitssicherheit. Es kann so ein ungewolltes Lösen der drehfesten Kopplung zwischen Trägergehäuse und Werkzeugträger verhindert werden.

In der bevorzugten, den topfartigen Ansatz am Lagergehäuse verwendenden Ausführungsform umfaßt die Spanneinrichtung einen die Schlitzbacken des axialen Schlitzes zusammenziehenden Spannbolzen mit einem Bolzenkopf, wobei auf einer Seite des Schlitzes gegen den Bolzenkopf das Ende einer Spannfeder anliegt, deren anderes Ende gegen den Boden einer Ausnehmung drückt, in welcher der Kopf des Spannbolzens geführt ist. Wird auf den Bolzenkopf eine Betätigungskraft ausgeübt, so läßt die Zugkraft zwischen den Schlitzbacken des axialen Schlitzes nach und der topfartige Ansatz weitet sich unter Entkopplung vom Werkzeugträger auf.

Eine Betätigungskraft für die ersfe oder/und zweite Kopplungseinrichtung kann pneumatisch oder/und hydraulisch erzeugt werden. Darüberhinaus wäre auch eine mechanische Betätigung der Kopplungseinrichtungen, beispielsweise über einen Stellmotor, denkbar.

In weiterer Ausgestaltung der Erfindung sind das Lagergehäuse und die Fräsmaschinenspindel durch die zweite Kopplungseinrichtung über eine Antriebswelle des Getriebes koppelbar, wobei vorzugsweise in der Antriebswelle Ausnehmungen vorgesehen sind, in welche die Bolzen eingreifen und die einen Drehanschlag für die Bolzen bilden. Vorzugsweise erstrecken sich die Ausnehmungen über eine Umfangslänge der Welle, die größer als der Bolzendurchmesser ist. In diesem Fall bedarf es keiner genauen Ausrichtung zwischen der Welle und den Bolzen, um die Bolzen zur Verkopplung in die Ausnehmungen einzuführen.

In weiterer vorteilhafter Ausgestaltung der Erfindung ist eine Sicherungseinrichtung vorgesehen, die bei zu hoher Drehzahl der Fräsmaschinenspindel ihre Verkopplung mit dem Trägergehäuse verhindert. Insbesondere die Ankopplung über die Bolzen würde hier leicht zur Zerstörung der Bolzen führen. Durch eine weitere Sicherungseinrichtung könnte verhindert werden, daß die Verkopplung von Trägergehäuse und Werkzeughalter erfolgt, bevor Trägergehäuse und Fräsmaschinenspindel entkoppelt sind. Eine zu frühzeitige Verkopplung würde ebenso zum Abscheren der Bolzen führen.

Die Zeichnungen geben ein Ausführungsbeispiel der Erfindung wieder.
- Fig. 1: zeigt einen Werkzeugträger einer Fräsmaschine mit angekoppeltem Zusatzwerkzeug teils in Ansicht und teils in senkrechtem Schnitt, und
- Fig. 2: zeigt die Anordnung nach Fig. 1 in waagerechtem Schnitt.

Mit dem Bezugszeichen 1 ist in den Figuren ein Werkzeugträger einer Fräsmaschine bezeichnet, in dem eine Spindel 2 drehbar gelagert ist. Der Werkzeugträger 1 mit der Spindel 2 ist in Richtung der Drehachse der Spindel 2 vertikal verschiebbar. Auf eine die Spindel 2 an ihrem unteren Ende führende Lagerbuchse 3 des Werkzeugträgers 1 ist mit einem Ansatz 5 ein allgemein mit 4 bezeichnetes Zusatzwerkzeug, das ein den Ansatz 5 umfassendes Trägergehäuse 6 aufweist, aufgeschoben.

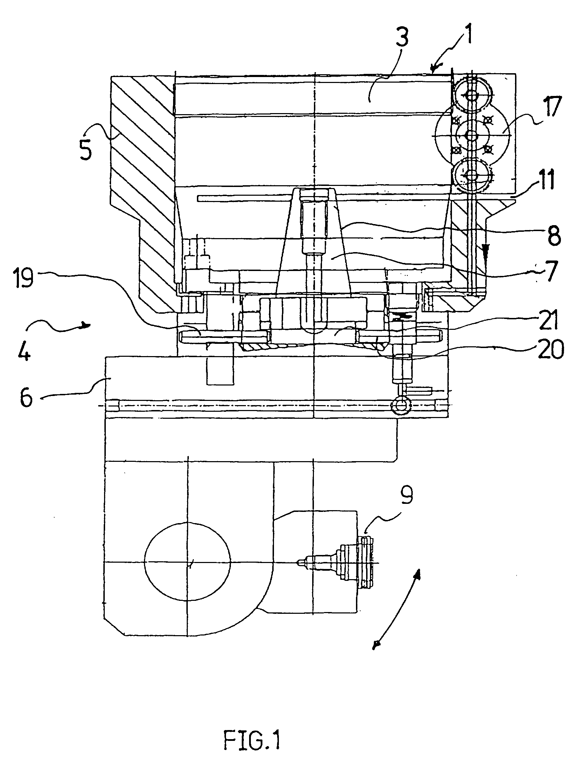

In dem Trägergehäuse 6 ist ein nicht dargestelltes, Kegelräder aufweisendes Getriebe untergebracht. Das Getriebe weist eine Antriebswelle 21 mit einem Verbindungskonus 7 auf, der in eine entsprechende Futterausnehmung 8 in der Spindel 2 der Fräsmaschine eingreift. Über das Getriebe ist eine Drehbewegung der Spindel 2 auf eine Arbeitsspindel 9 des Zusatzwerkzeugs 4 übertragbar. Die Arbeitsspindel 9 ist entsprechend dem in Fig. 1 eingezeichneten Pfeil in eine gewünschte Winkelstellung zur Drehachse der Spindel 2 verstellbar, wobei sich die Drehachse der Arbeitsspindel 2 vorzugsweise durch den Kugelmittelpunkt eines runden, in die Arbeitsspindel 9 eingespannten Fräskopfs (nicht gezeigt) erstreckt.

Ein in dem topfartigen Ansatz 5 gebildeter axialer Schlitz 10 erstreckt sich über einen Teil der axialen Länge des Ansatzes. Senkrecht zu dem Schlitz 10 ist in dem Ansatz 5 ein weiterer Schlitz 11 vorgesehen.

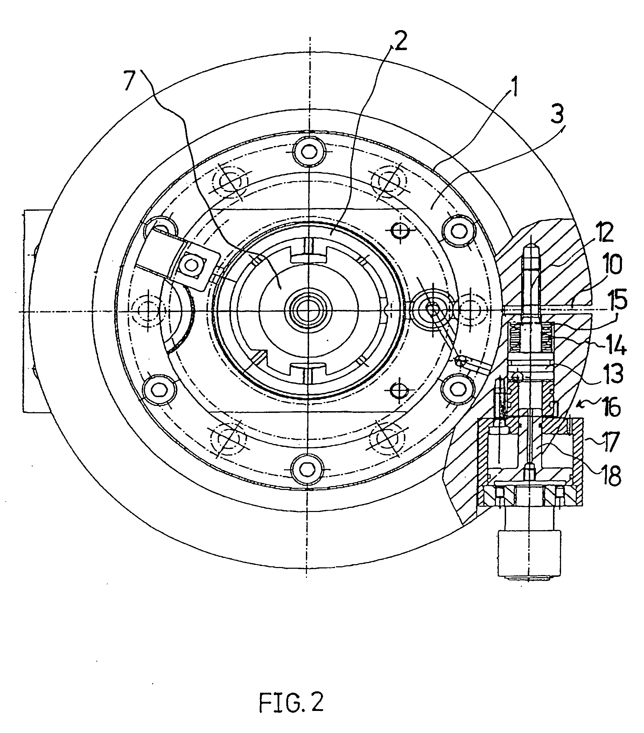

In der Fig. 2 ist ein mit einem Kopf 13 versehener Spannbolzen 12 zu erkennen, der auf einer Seite des axialen Schlitzes 10 in ein Gewinde in dem Ansatz 5 eingreift. Auf der anderen Seite des axialen Schlitzes 10 ist der Spannbolzen 12 mit seinem Kopf 13 in einer Ausnehmung 14 in dem Ansatz 5 geführt und durch eine Feder 15 beaufschlagt, die mit einem Ende gegen den Boden der Ausnehmung 14 und mit dem anderen Ende gegen den Kopf 13 des Spannbolzens 12 anliegt. Durch den federbeaufschlagten Bolzen werden daher die einander gegenüberliegenden Backen des axialen Schlitzes 10 zusammengezogen, wodurch eine Klemmverbindung zwischen dem topfartigen Ansatz 5 und der Lagerbuchse 3 des Werkzeugträgers 1 hergestellt ist. Der Schlitz 11 sorgt zusätzlich für eine zur Herstellung der Klemmverbindung erforderliche Flexibilität des Ansatzes 5.

Der Kopf 13 des Spannbolzens 12 ist durch eine allgemein mit 16 bezeichnete Betätigungseinrichtung in Richtung der Bolzenachse beaufschlagbar. In dem gezeigten Ausführungsbeispiel weist die Betätigungseinrichtung einen Pneumatikzylinder 17 mit einem Kolben 18 auf, wobei der Kolben 18 auf den Kopf 13 des Spannbolzens 12 einwirkt.

Wie aus Fig. 1 hervorgeht, sind ferner Bolzen 19 und 20 für den Eingriff in eine Ausnehmung in der den Verbindungskonus 7 aufweisende Antriebswelle 21 des Getriebes vorgesehen. In dem gezeigten Ausführungsbeispiel sind die Bolzen durch nicht gezeigte Pneumatikzylinder bewegbar. Die Ausnehmungen in der Antriebswelle 21 erstrecken sich über eine Umfangslänge, die merklich größer als der Bolzendurchmesser ist.

Im folgenden soll die Funktionsweise des vorangehend beschriebenen Zusatzwerkzeugs im Zusammenwirken mit der genannten Fräsmaschine erläutert werden.

Im normalen Fräsbetrieb unter Verwendung des Zusatzwerkzeugs 4 ist zwischen dem Ansatz 5 und der Lagerbuchse 3 eine Klemmverbindung hergestellt, so daß das Zusatzwerkzeug 4 drehfest mit dem Werkzeugträger 1 verbunden ist. Der Antrieb der Arbeitsspindel 9 erfolgt durch die Spindel 2 der Fräsmaschine über das nicht gezeigte Getriebe. Wie in der eingangs erwähnten DE 196 20 485 A1 beschrieben ist, lassen sich mit dem Zusatzwerkzeug vorteilhaft Hinterschneidungen in Ausnehmungen bearbeiten.

Ist bei diesen Arbeiten eine Veränderung der Arbeitsstellung des Zusatzwerkzeugs erforderlich oder wünschenswert, so wird zunächst die Drehzahl der Spindel 2 der Fräsmaschine stark verringert. Ist eine erforderliche geringe Drehzahl erreicht, so erfolgt eine Druckbeaufschlagung des Pneumatikzylinders 10, so daß der Kolben 18 auf den Spannbolzen 12 drückt. Dadurch wird die die Backen des Schlitzes 10 zusammenziehende, durch den Spannbolzen 12 ausgeübte Kraft verringert und der Ansatz 5 weitet sich unter Aufhebung der drehfesten Klemmverbindung zwischen dem Ansatz 5 und der Lagerbuchse 3 auf. Das Zusatzwerkzeug 4 ist nun drehbeweglich und wird nur über den in die Futterausnehmung 8 eingreifenden Verbindungskonus 7 an dem Werkzeugträger 1 gehalten.

Damit das Zusatzwerkzeug 4 durch langsame Drehung der Spindel 2 der Fräsmaschine in eine gewünschte neue Arbeitsstellung verdreht werden kann, muß das den Ansatz 5 umfassende Trägergehäuse 6 des Zusatzwerkzeugs 4 an die Spindel 2 gekoppelt werden, so daß sich das gesamte Zusatzwerkzeug mit der Spindel 2 mitdrehen kann. In dem gezeigten Ausführungsbeispiel erfolgt diese Kopplung über die Antriebswelle 21, wozu die Bolzen 19,20 zum Eingriff in die genannten Ausnehmungen in der Welle 21 vorgeschoben werden. Die Spindel 2 wird nun verdreht, bis einer der Bolzen am Ende der sich über den Umfang der Welle 21 erstreckenden Ausnehmung gegen die Welle anschlägt. Über eine programmierte Maschinensteuerung kann dann eine gewünschte Verdrehung erfolgen. Auch die vorangehend erwähnte Entkopplung und Verkopplung ist in diese Programmsteuerung einbezogen.

Nach Drehung der Spindel 2 um einen vorberechneten Winkel und damit Drehung des Zusatzwerkzeugs 4 in eine gewünschte neue Arbeitsposition werden die Bolzen 19,20 aus den genannten Ausnehmungen zurückgezogen und die Welle 21 wird damit freigegeben. Danach erfolgt die erneute Ankopplung des Ansatzes 5 an die Lagerbuchse 3 des Werkzeugträgers 1. Zwecks dieser Ankopplung wird der vor der erwähnten Drehung des gesamten Werkzeugs an den Kolben 18 des Pneumatikzylinders 17 gelegte Druck zurückgenommen, wobei automatisch die Feder 15 die einander gegenüberliegenden Backen des Schlitzes 10 zusammenzieht und so die Klemmverbindung zwischen dem Ansatz 5 und der Lagerbuchse 3 wiederherstellt.

Geeignete, durch Software implementierbare Sicherheitseinrichtungen können dafür sorgen, daß die Betätigung der Bolzen 19,20 gesperrt ist, solange die Drehgeschwindigkeit der Spindel 2 oberhalb eines vorbestimmten Wertes liegt. Ferner kann eine Sicherungseinrichtung vorgesehen sein, welche ein Ansteigen der Drehzahl der Spindel verhindert, solange der Ansatz 5 nicht drehfest an die Lagerbuchse 3 angekoppelt ist.

## Patentansprüche

1. Zusatzwerkzeug (4) für eine Fräsmaschine, das über ein Trägergehäuse (6) an den die Spindel (2) der Fräsmaschine umfassenden Werkzeugträger (1) koppelbar und zur Änderung seiner Arbeitsstellung durch die Fräsmaschinenspindel (2) um deren Drehachse drehbar ist und selbst eine Arbeitsspindel (9) mit einer zur Drehachse der Fräsmaschinenspindel (2) geneigten Drehachse aufweist,
**gekennzeichnet durch** eine erste Kopplungseinrichtung zum Ver- und Entkoppeln von Trägergehäuse (6) und Werkzeugträger (1), **durch** die das Trägergehäuse (6) unter Herstellung einer Antriebsverbindung zwischen der Arbeitsspindel (9) und der Fräsmaschinenspindel (2) drehfest an den Werkzeugträger (1) koppelbar ist, sowie eine zweite Kopplungseinrichtung zum Ver- und Entkoppeln von Trägergehäuse (6) und Fräsmaschinenspindel (2), so daß im verkoppelten Zustand das Zusatzwerkzeug mit der Fräsmaschinenspindel (2) mitdrehen kann.

2. Zusatzwerkzeug nach Anspruch 1,
**dadurch gekennzeichnet,**
**daß** die Antriebsverbindung über ein, vorzugsweise Kegelräder aufweisendes, Getriebe herstellbar ist.

3. Zusatzwerkzeug nach Anspruch 1 oder 2,
**dadurch gekennzeichnet,**
**daß** durch die erste Kopplungseinrichtung eine Klemmverbindung zwischen dem Trägergehäuse (6) und dem Werkzeugträger (1) herstellbar ist.

4. Zusatzwerkzeug nach einem der Ansprüche 1 bis 3,
**dadurch gekennzeichnet,**
**daß** das Trägergehäuse (6) einen auf eine Lagerungseinrichtung (3) für die Fräsmaschinenspindel aufschiebbaren, topfartigen Ansatz (5) umfaßt.

5. Zusatzwerkzeug nach Anspruch 4,
**dadurch gekennzeichnet,**
**daß** der topfartige Ansatz (5) einen axialen Schlitz (10) und vorzugsweise ferner einen zu dem axialen Schlitz (10) senkrechten Schlitz (11) aufweist.

6. Zusatzwerkzeug nach einem der Ansprüche 1 bis 5,
**dadurch gekennzeichnet,**
**daß** die erste Kopplungseinrichtung eine beim Nachlassen einer zur Entkopplung ausgeübten Betätigungskraft automatisch die Kopplung wiederherstellende Spanneinrichtung (12-15) umfaßt.

7. Zusatzwerkzeug nach Anspruch 6,
**dadurch gekennzeichnet,**
**daß** die Spanneinrichtung einen die Schlitzbacken des axialen Schlitzes (11) zusammenziehenden Spannbolzen (12) mit einem Bolzenkopf (13) umfaßt, der auf einer Seite des Schlitzes (10) eine mit einem Ende gegen den Kopf (13) und dem anderen Ende gegen den Ansatz (5) anliegenden Feder (15) aufweist.

8. Zusatzwerkzeug nach einem der Ansprüche 1 bis 7,
**dadurch gekennzeichnet,**
**daß** die erste und/oder zweite Kopplungseinrichtung zur Ent- oder/und Verkopplung pneumatisch oder/und hydraulisch zu betätigen ist.

9. Zusatzwerkzeug nach einem der Ansprüche 1 bis 8,
**dadurch gekennzeichnet,**
**daß** das Lagergehäuse (6) und die Fräsmaschinenspindel (2) durch die zweite Kopplungseinrichtung über eine Antriebswelle (21) des Getriebes koppelbar sind.

10. Zusatzwerkzeug nach Anspruch 9,
**dadurch gekennzeichnet,**
**daß** die zweite Kopplungseinrichtung einen zum Eingriff in eine Ausnehmung in der Antriebswelle (21) vorgesehenen Bolzen (20) umfaßt.

11. Zusatzwerkzeug nach Anspruch 10,
**dadurch gekennzeichnet,**
**daß** sich die Ausnehmung über eine Umfangslänge der Antriebswelle (21) erstreckt, die größer als der Bolzendurchmesser ist.

12. Zusatzwerkzeug nach einem der Ansprüche 1 bis 11,
**dadurch gekennzeichnet,**
**daß** die Betätigung der ersten und zweiten Kopplungseinrichtung und die Drehung des Zusatzwerkzeugs über die Fräsmaschinenspindel im Rahmen eines die Fräsmaschine automatisch steuernden Fräsarbeitsprogramms steuerbar ist.

13. Zusatzwerkzeug nach einem der Ansprüche 1 bis 12,
**dadurch gekennzeichnet,**
**daß** eine bei zu hoher Drehzahl der Fräsmaschinenspindel die Verkopplung von Trägergehäuse und Fräsmaschinenspindel verhindernde Sicherungseinrichtung vorgesehen ist.
